# EUROPEAN PATENT SPECIFICATION

(11) **EP 3 399 790 B1**
(45) Date of publication and mention of the grant of the patent: **12.08.2020**
(21) Application number: 16891407.5
(22) Date of filing: 22.02.2016
(51) Int. Cl.: H04W 28/04, H04W 74/08

(54) **COMMUNICATION APPARATUS, COMMUNICATION METHOD, AND COMMUNICATION PROGRAM**
KOMMUNIKATIONSVORRICHTUNG, KOMMUNIKATIONSVERFAHREN UND KOMMUNIKATIONSPROGRAMM
APPAREIL DE COMMUNICATION, PROCÉDÉ DE COMMUNICATION ET PROGRAMME DE COMMUNICATION

(43) Date of publication of application: 07.11.2018
(73) Proprietor: Mitsubishi Electric Corporation, Chiyoda-ku Tokyo 100-8310 (JP)
(72) Inventor: SOMA, Shingo, Tokyo 100-8310 (JP); YAGI, Akiyoshi, Tokyo 100-8310 (JP)
(74) Representative: Pfenning, Meinig & Partner mbB
(86) International application number: PCT/JP2016/055117
(87) International publication number: WO 2017/145248

(56) References cited:
- WO-A1-2005/119969
- WO-A2-2014/194777
- JP-A- H 089 462
- JP-A- H02 238 735
- US-A- 5 353 287
- US-A1- 2007 110 092
- US-A1- 2010 254 365

## Description

### Technical Field

The present invention relates to a technique for controlling waiting time set before data transmission.

Hereinafter, a control of waiting time in wireless communication will mainly be explained.

### Background Art

In wireless communication standards represented by IEEE 802.11 and IEEE 802.15.4, CSMA/CA (Carrier Sense Multiple Access with Collision Avoidance) is adopted as a communication procedure of wireless communication. In the CSMA/CA method, waiting time being random time is set before transmission of a radio frame. After the waiting time expires, the radio frame is transmitted. Then, when a failure of the transmission of the radio frame is detected, the waiting time is set again. After the waiting time expires, the radio frame is transmitted again.

In IEEE 802.15.4, the waiting time in retransmission is reset within a range of "minimum setting value to maximum setting value" of back-off timer (IEEE Std 802.15.4). In IEEE802.11, the back-off timer is extended at every retransmission according to Binary Exponential Backoff (BEB) method, thereby a probability of a collision avoidance with surroundings is increased (IEEE Std 802.11).

Document US 2010/0254365 A1 describes a method for handling emergency message frames sent by a station in a wireless local-area network. In the method the probability with which an emergency message frame is accorded the singularly highest quality-of-service is increased by modifying one or more IEEE 802.11e parameters for a station or access point that transmits an emergency message frame.

### Citation List

### Non-Patent Literature

Non-Patent Literature 1: N-BEB: New backoff algorithm for IEEE 802.11 MAC protocol <http://ieeexplore.ieee.org/xpl/login.jsp?tp=&arnumber=6859627&url=http%3A%2F% 2Fieeexplore.ieee.org%2Fxpls%2Fabs_all.jsp%3Farnumber%3D6859627>
Non-Patent Literature 2: IEEE 802.15.4 <https://standards.ieee.org/getieee802/download/802.15.4-2011.pdf>

### Summary of Invention

### Technical Problem

For an urgent message such as an alarm notification of an alarm apparatus, it is required to shorten time before transmission. However, in an environment where nodes are densely disposed, a collision of wireless communication is likely to occur. In the environment where the collision of wireless communication is likely to occur, first transmission is likely to fail. When the first transmission fails, retransmission is performed after waiting for waiting time for retransmission. For retransmission, in IEEE 802.15.4, it is required to have the waiting time equivalent to that for the first transmission. Also, in the BEB method of IEEE 802.11, the waiting time for retransmission increases at every retransmission.

As described above, according to the conventional art, in an environment where wireless communication frequently occurs, or in an environment where alarm notifications occur simultaneously from a plurality of nodes, it is highly likely that the first transmission fails. According to the conventional art, there is a problem that when the first transmission fails, it takes time until retransmission is performed and data transmission is not completed within required time.

The present invention mainly aims to solve this problem. That is, the present invention mainly aims to enable retransmission to be performed promptly even if first transmission fails so that data transmission can be completed within the required time.

### Solution to Problem

The above problems are solved by the subject-matter according to the independent claims. A communication apparatus according to the present invention, includes:
a first transmission waiting time determination unit to determine first transmission waiting time which is waiting time before performing first transmission of data, from a first time width, using a random number; and
a retransmission waiting time determination unit to determine, when the first transmission fails, retransmission waiting time which is waiting time before performing retransmission of the data, from a second time width which is shorter than the first time width, using the random number.

### Advantageous Effects of Invention

According to the present invention, since the retransmission waiting time is selected from the second time width which is shorter than the first time width, even if the first transmission fails, it is possible to increase the possibility that the retransmission is performed promptly.

### Brief Description of Drawings

Fig. 1 is a diagram illustrating an example of a configuration of a wireless communication system according to a first embodiment;
Fig. 2 is a diagram illustrating another example of the configuration of the wireless communication system according to the first embodiment;
Fig. 3 is a diagram illustrating an example of hardware configuration of a wireless communication apparatus according to the first embodiment;
Fig. 4 is a diagram illustrating an example of functional configuration of the wireless communication apparatus according to the first embodiment;
Fig. 5 is a flow chart diagram illustrating an example of operation of the wireless communication apparatus according to the first embodiment;
Fig. 6 is a flow chart diagram illustrating an example of operation of the wireless communication apparatus according to the first embodiment;
Fig. 7 is a flow chart diagram illustrating an example of operation of the wireless communication apparatus according to the first embodiment;
Fig. 8 is a flow chart diagram illustrating an example of operation of the wireless communication apparatus according to the first embodiment;
Fig. 9 is a diagram illustrating an example of operation of a MAC control unit according to the first embodiment;
Fig. 10 is a diagram illustrating an example of operation of the MAC control unit according to the first embodiment;
Fig. 11 is a diagram illustrating examples of first transmission waiting time and retransmission waiting time according to the first embodiment;
Fig. 12 is a diagram illustrating examples of the first transmission waiting time and the retransmission waiting time according to the first embodiment;
Fig. 13 is a diagram illustrating examples of first transmission waiting time and retransmission waiting time according to a third embodiment; and
Fig.14 is a diagram illustrating an example of operation of a MAC control unit according to a fourth embodiment.

### Description of Embodiments

### First Embodiment

### *** Explanation of configuration ***

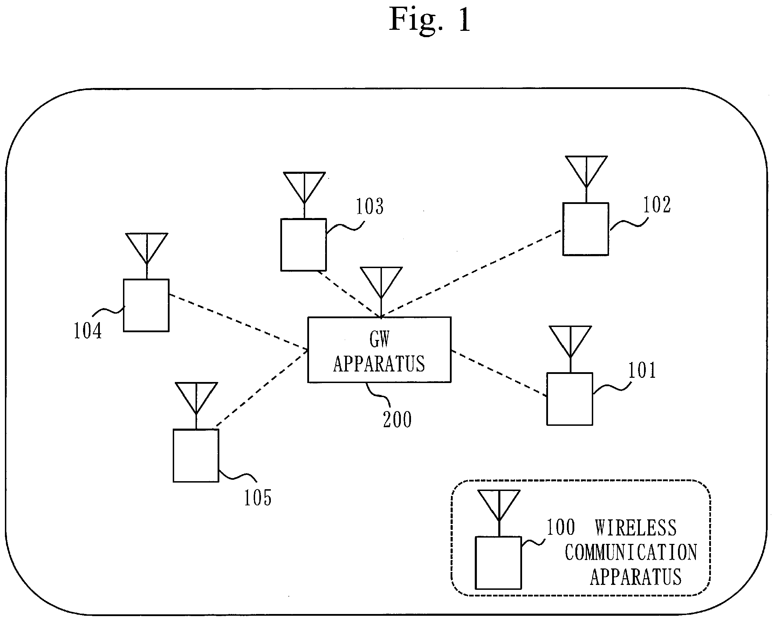

Fig.1 illustrates an example of configuration of a wireless communication system according to the present embodiment.

The wireless communication system illustrated in Fig.1 is composed of a GW (gate way) apparatus 200 and a plurality of wireless communication apparatuses 101 to 105.

Each of the wireless communication apparatuses 101 to 105 transmits data to the GW apparatus 200 by wireless communication.

When it is not necessary to distinguish each of the wireless communication apparatuses 101 to 105, the wireless communication apparatuses 101 to 105 are collectively referred to as a wireless communication apparatus 100.

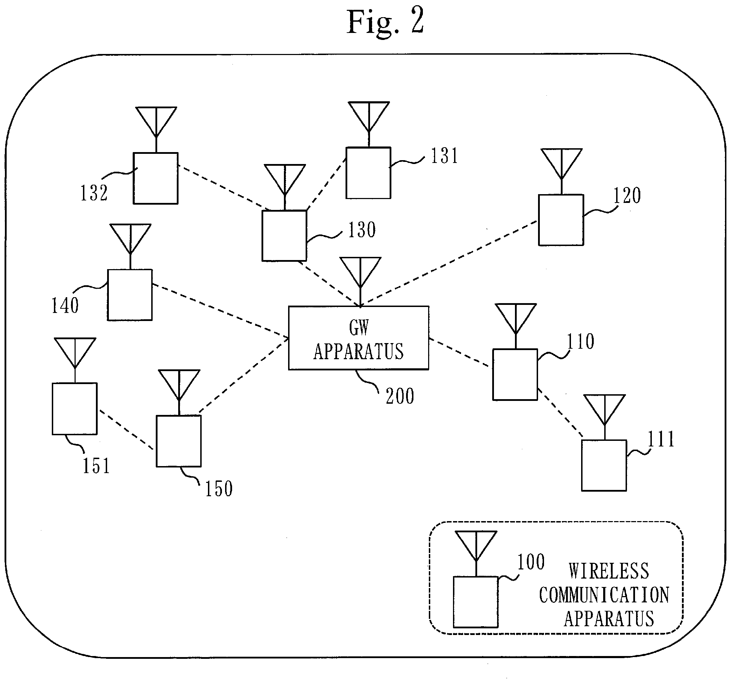

Fig.2 illustrates an example of configuration of the wireless communication system according to the present embodiment

The wireless communication system illustrated in Fig.2 is composed of a GW apparatus 200 and a plurality of wireless communication apparatuses 110 to 151.

The wireless communication apparatuses 110, 120, 130, 140 and 150 can perform wireless communication directly with the GW apparatus 200.

On the other hand, the wireless communication apparatuses 111, 131, 132 and 151 cannot perform wireless communication directly with the GW apparatus 200. In order for the wireless communication apparatuses 111, 131, 132 and 151 to transmit data to the GW apparatus 200, relay by another wireless communication apparatus is required.

Specifically, the wireless communication apparatus 111 transmits data to the GW apparatus 200 via the wireless communication apparatus 110.

Further, the wireless communication apparatus 131 and 132 transmit data to the GW apparatus 200 via the wireless communication apparatus 130.

Furthermore, the wireless communication apparatus 151 transmits data to the GW apparatus 200 via the wireless communication apparatus 150.

Also in the wireless communication system of Fig. 2, when it is not necessary to distinguish each of the wireless communication apparatuses 110 to 151, the wireless communication apparatuses 110 to 151 are collectively referred to as the wireless communication apparatus 100.

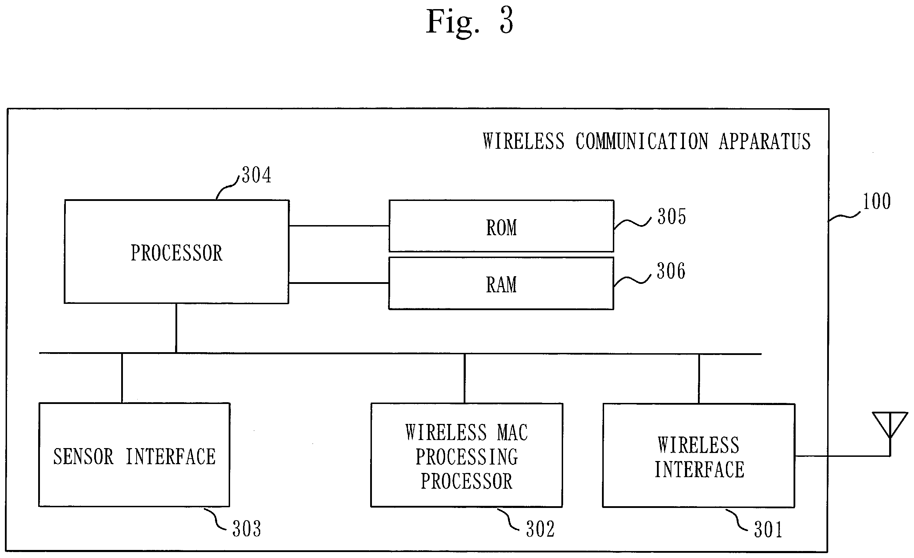

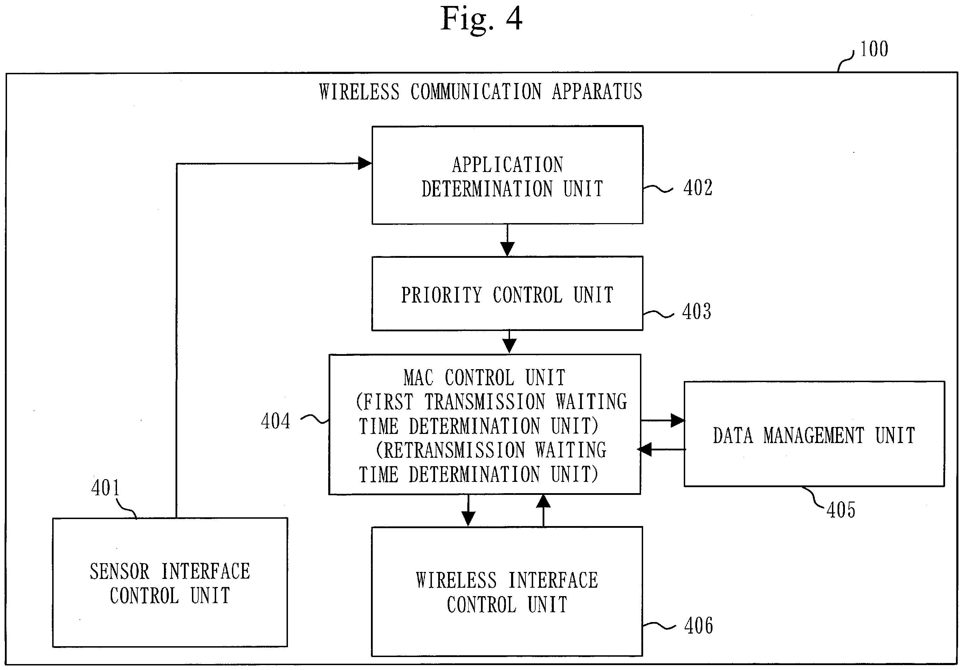

Fig.3 illustrates an example of hardware configuration of the wireless communication apparatus 100 according to the present embodiment. Fig.4 illustrates an example of functional configuration of the wireless communication apparatus 100 according to the present embodiment.

As illustrated in Fig.3, the wireless communication apparatus 100 is a computer including a wireless interface 301, a wireless MAC processing processor 302, a sensor interface 303, a processor 304, a ROM (Read Only Memory) 305, and a RAM (Random Access Memory) 306.

The wireless interface 301 is a circuit which functions as an interface with a wireless communication line. The wireless interface 301 realizes a sensor interface control unit 401 illustrated in Fig.4.

The sensor interface 303 is a circuit which functions as an interface with a sensor. The sensor interface 303 receives a signal (hereinafter referred to as a sensor signal) notifying of a phenomenon detected by the sensor. The sensor detects a phenomenon which is subject to an emergency notification and a phenomenon which is not subject to the emergency notification. When the sensor detects a phenomenon which is subject to the emergency notification, the wireless communication apparatus 100 needs to urgently notify the notification destination apparatus of the phenomenon as the emergency notification. On the other hand, if the sensor detects a phenomenon which is not subject to the emergency notification, the wireless communication apparatus 100 notifies the notification destination apparatus of the phenomenon as a normal application notification. The phenomenon subject to the emergency notification is, for example, an earthquake, a fire or the like. Also, for example, outputting an alarm by a device in a factory can be included in the phenomenon of the emergency notification. The notification destination apparatus of the wireless communication apparatus 101 in Fig.1 is the GW apparatus 200, and the notification destination apparatus of the wireless communication apparatus 111 in Fig.2 is the wireless communication apparatus 110.

The wireless MAC processing processor 302 is a processor which executes a MAC control unit 404 illustrated in Fig.4.

The processor 304 is a processor which executes an application determination unit 402 and a priority control unit 403 illustrated in Fig.4.

The wireless MAC processing processor 302 and the processor 304 are, for example, CPUs (Central Processing Units). The wireless MAC processing processor 302 and the processor 304 may be different CPUs or the same CPU.

The application determination unit 402, the priority control unit 403 and the MAC control unit 404 illustrated in Fig. 4 are realized by programs. The programs realizing the application determination unit 402, the priority control unit 403 and the MAC control unit 404 are stored in the ROM 305, loaded in the RAM 306, and executed by the wireless MAC processing processor 302 and the processor 304.

In the ROM 305, in addition to the above programs, control information and setting information necessary for controlling the wireless communication apparatus 100 are stored.

The RAM 306 constitutes a data management unit 405 illustrated in Fig.4.

In Fig.4, the sensor interface control unit 401 controls the sensor interface 303 of Fig.3.

When the sensor interface 303 receives the sensor signal, the application determination unit 402 determines whether or not the phenomenon notified by the sensor signal is a phenomenon subject to the emergency notification.

Hereinafter, a fact that the sensor interface 303 has received the sensor signal is also referred to as an occurrence of a transmission event. Hereinafter, a case where the phenomenon subject to the emergency notification is notified in the sensor signal is also referred to as an occurrence of the emergency event.

The priority control unit 403 sets priority to the sensor signal. Specifically, the priority control unit 403 sets high priority to a sensor signal by which the emergency notification is performed, and set lower priority than the priority of the emergency notification, to a sensor signal by which the normal application notification is performed.

The MAC control unit 404 generates a wireless frame which is data including the sensor signal and determines waiting time set before transmission of the wireless frame.

More specifically, the MAC control unit 404 determines first transmission waiting time which is waiting time set before performing the first transmission of the wireless frame, from a first time width, using a random number. Further, the MAC control unit404 determines, when the first transmission fails, retransmission waiting time which is waiting time set before performing the retransmission of the wireless frame, from a second time width which is shorter than the first time width, using the random number. "When the first transmission fails" means that the first transmission has not been able to be performed by Clear Channel Assessment (CCA) or the first transmission has been able to be performed but a response to the first transmission has not been able to be received.

Also, the MAC control unit 404 determines the first transmission waiting time by the priority set by the priority control unit 403. Further, the MAC control unit 404 determines the retransmission waiting time by the priority set by the priority control unit 403.

The MAC control unit 404 sets the determined first transmission waiting time or the determined retransmission waiting time to a back-off timer. Then, when the back-off timer expires (when the first transmission waiting time or the retransmission waiting time expires), the wireless frame is output to a wireless interface control unit 406.

The MAC control unit 404 corresponds to a first transmission waiting time determination unit and a retransmission waiting time determination unit. Further, operations performed by the MAC control unit 404 correspond to a first transmission waiting time determination process and a retransmission waiting time determination process.

A data management unit 405 stores an address of the notification destination apparatus.

The wireless interface control unit 406 transmits the wireless frame generated by the MAC control unit 404 to the notification destination apparatus, as the emergency notification or the normal application notification.

### *** Explanation of operation ***

Next, an outline of operations of the wireless communication apparatus 100 according to the present embodiment will be described. The operations of the wireless communication apparatus 100 described below are examples of a communication method and a communication program.

First, the sensor interface control unit 401 receives the sensor signal from the sensor.

Next, the application determination unit 402 analyzes a type of the sensor signal received by the sensor interface control unit 401, and determines a phenomenon notified by the sensor signal. Specifically, a table is held in the ROM 305, in which a type (identifier) of the sensor signal and a phenomenon notified by the sensor signal are associated with each other. The application determination unit 402 refers to the table, and determines the phenomenon notified by the sensor signal. Further, the application determination unit 402 determines whether or not the phenomenon notified by the sensor signal is subject to the emergency notification. Specifically, a table is held in the ROM 305, which describes as to whether or not each phenomenon is subject to the emergency notification. The application determination unit 402 refers to the table, and determines whether or not the phenomenon notified by the sensor signal is subject to the emergency notification.

Next, the application determination unit 402 outputs to the priority control unit 403, the sensor signal and information indicating whether or not a phenomenon notified by the sensor signal is subject to the emergency notification.

The priority control unit 403 sets the priority for the sensor signal. That is, if the phenomenon notified by the sensor signal is subject to the emergency notification, the priority control unit 403 sets high priority or the highest priority to the sensor signal. On the other hand, if the phenomenon notified by the sensor signal is subject to the normal application notification, the priority control unit 403 sets normal priority or low priority to the sensor signal. As described above, the priority control unit 403 sets a higher priority than that of the normal application notification to the emergency notification.

The priority control unit 403 outputs the sensor signal and information indicating the priority set to the sensor signal, to the MAC control unit 404.

Next, the MAC control unit 404 generates the wireless frame which is data including the sensor signal. The MAC control unit 404 then stores the generated wireless frame in a queue for the first transmission provided for each priority and determines the first transmission waiting time, using the random number. The MAC control unit 404 sets the determined first transmission waiting time to a first transmission back-off timer.

For example, if it is a sensor signal of the high priority, the MAC control unit 404 stores the wireless frame in a queue for the first transmission of the high priority. Then the MAC control unit 404 determines the first transmission waiting time for the high priority, using the random number, and sets the determined first transmission waiting time for the high priority to the first transmission back-off timer for the high priority.

When the first transmission waiting time expires, the MAC control unit 404 extracts the wireless frame from the queue for the first transmission and outputs the wireless frame to the wireless interface control unit 406.

The wireless interface control unit 406 performs the CCA before transmitting the wireless frame generated by the MAC control unit 404. As a result of the CCA, if the first transmission of the wireless frame cannot be performed, the wireless interface control unit 406 returns the wireless frame to the MAC control unit 404.

The MAC control unit 404 stores in a queue for the retransmission provided for each priority, the wireless frame of which the first transmission has not been able to be performed due to the CCA. Then, the MAC control unit 404 determines the retransmission waiting time, using the random number, and sets the determined retransmission waiting time to a retransmission back-off timer.

Operations after the retransmission waiting time has expired are the same as the operations after the first transmission waiting time has expired. If the retransmission of the wireless frame cannot be performed due to the CCA, the MAC control unit 404 determines the retransmission waiting time for further retransmission. Then, the MAC control unit 404 sets the determined retransmission waiting time to the retransmission back-off timer.

If the first transmission of the wireless frame has been able to be performed but a response to the wireless frame has not been able to be received from the notification destination apparatus, the wireless interface control unit 406 also returns the wireless frame to which the response has not been able to be received, to the MAC control unit 404.

The MAC control unit 404 stores in the queue for the retransmission provided for each priority, the wireless frame to which the response has not been able to be received. Then, the MAC control unit 404 determines the retransmission waiting time, using the random number, and sets the determined retransmission waiting time to the retransmission back-off timer.

Operations after the retransmission waiting time has expired are the same as the operations after the first transmission waiting time has expired. If the retransmission of the wireless frame cannot be performed due to the CCA, the MAC control unit 404 determines the retransmission waiting time for further retransmission. Then, the MAC control unit 404 sets the determined retransmission waiting time to the retransmission back-off timer.

If the first transmission of the wireless frame has been able to be performed but a response to the wireless frame has not been able to be received from the notification destination apparatus, the wireless interface control unit 406 also determines the retransmission waiting time for further retransmission. Then, the MAC control unit 404 sets the determined retransmission waiting time to the retransmission back-off timer.

After that, each time the retransmission fails, the above operations are repeated until an upper limit number of the retransmission is reached.

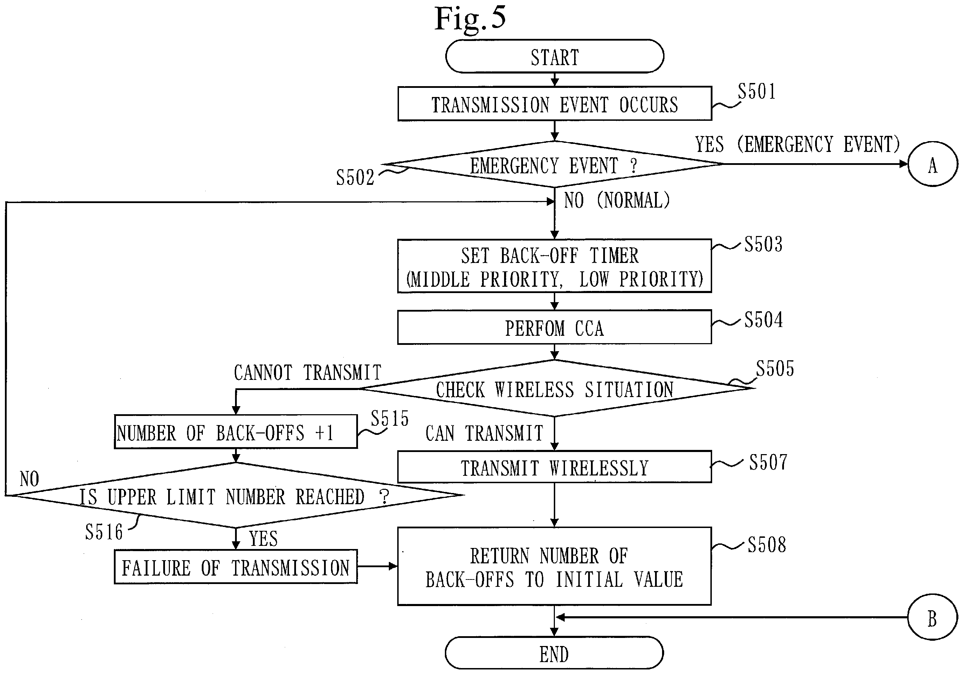

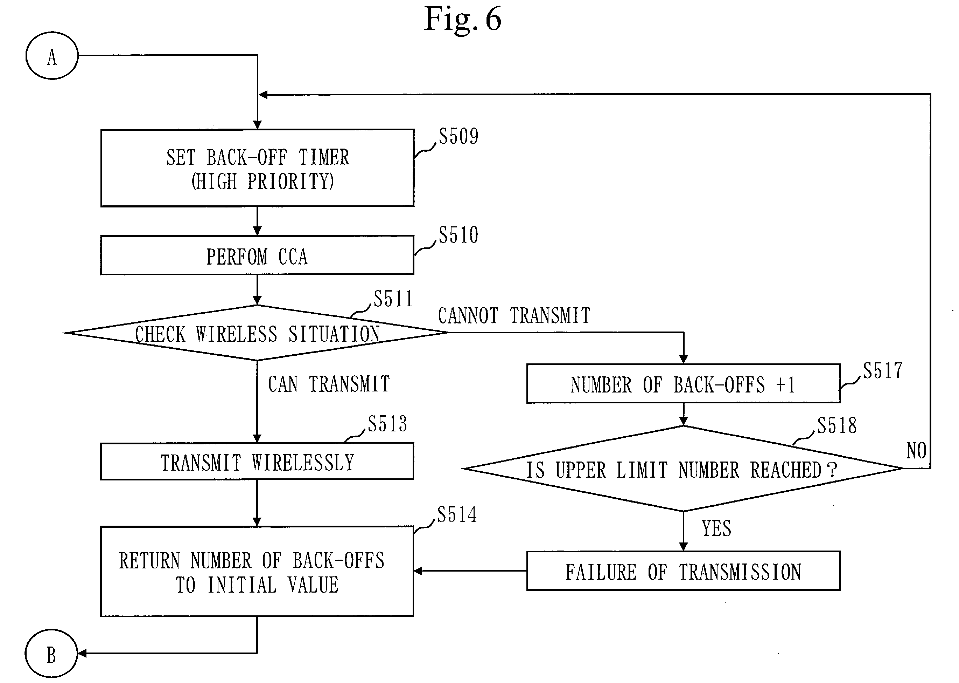

Next, with reference to flow charts in Fig.5 and Fig.6, an example of operation of the wireless communication apparatus 100 according to the present embodiment will be described. The flow charts in Fig.5 and Fig.6 illustrate the example of operation of the wireless communication apparatus 100 conforming to IEEE 802.15.4. An operational procedure illustrated in Fig.5 and Fig.6 can also be applied to the wireless communication apparatus 100 conforming to IEEE 802.15.4. Further, the operational procedure illustrated in Fig.5 and Fig.6 can be widely applied to the wireless communication apparatus 100 corresponding to CSMA/CA.

When the transmission event occurs (step S 501), that is, when the sensor interface control unit 401 receives the sensor signal, the application determination unit 402 determines whether or not the transmission event is the emergency event (step S 502). That is, the application determination unit 402 determines whether or not a phenomenon notified by the sensor signal received by the sensor interface control unit 401 is subject to the emergency notification.

If the transmission event is not the emergency event, the MAC control unit 404 generates a wireless frame including the sensor signal. Then, the MAC control unit 404 stores the wireless frame in the queue for the first transmission of medium priority or low priority and sets the first transmission waiting time to the back-off timer (step S503).

Since it is the first transmission, the MAC control unit 404 determines the first transmission waiting time from the first time width, using the random number. Then, the MAC control unit 404 sets the determined first transmission waiting time to the back-off timer.

The first time width is composed of i (i is an integer equal to or greater than 3) slots of a prescribed slot width. The MAC control unit 404 selects one of the i slots using the random number and determines the time corresponding to the selected slot as the first transmission waiting time.

For example, if the slot width is 1 millisecond and i is 100, the first time width is 100 milliseconds. When the 70th slot is selected using the random number, the MAC control unit 404 sets 70 milliseconds as the first transmission waiting time to the back-off timer.

When the back-off timer expires, the wireless interface control unit 406 perfoms the CCA (step S 504) and checks wireless situation on the wireless communication line (step S505).

As a result of the CCA, if the wireless interface control unit 406 determines that the wireless interface control unit 406 can transmit the wireless frame, the wireless interface control unit 406 transmits the wireless frame to the notification destination apparatus (step S507).

Then, the MAC control unit 404 returns the number of back-offs described later to an initial value (step S508).

On the other hand, in step S505, as a result of the CCA, a surrounding wireless environment is congested, and the wireless interface control unit 406 determines that the wireless interface control unit 406 cannot transmit the wireless frame (the retransmission is necessary), the MAC control unit 404 increments the number of back-offs by 1 (step S515). The number of back-offs is the number of retransmissions by the CCA.

Next, the MAC control unit 404 determines whether or not the number of back-offs has reached an upper limit number (step S516). If the number of back-offs has reached the upper limit number, the MAC control unit 404 determines that the transmission has failed and returns the number of back-offs to the initial value (step S508).

On the other hand, if the number of back-offs has not reached the upper limit number, the wireless frame is returned to the MAC control unit 404. Then, the MAC control unit 404 stores the wireless frame in a queue for retransmission of middle priority or low priority and sets the retransmission waiting time to the back-off timer (S503).

Since it is the retransmission, the MAC control unit 404 determines the retransmission waiting time using the random number from the second time width which is shorter than the first time width. The MAC control unit 404 sets the determined retransmission waiting time to the back-off timer.

More specifically, the second time width is composed of j (j is an integer equal to or greater than 2 and less than i) slots of the prescribed slot width. The MAC control unit 404 selects one of the j slots using the random number and determines the time corresponding to the selected slot as the retransmission waiting time.

For example, if the slot width is 1 millisecond and j is 50, the second time width is 50 milliseconds. When the 30th slot is selected using the random number, the MAC control unit 404 sets 30 milliseconds as the retransmission waiting time to the back-off timer.

Since the processing after step S504 is as described above, an explanation will be omitted.

In step S 502, if the transmission event is determined as the emergency event, the MAC control unit 404 generates the wireless frame including the sensor signal. The MAC control unit 404 stores the wireless frame in a queue for the first transmission of the high priority and sets the first transmission waiting time to the back-off timer (step S509).

Since it is the first transmission, the MAC control unit 404 determines the first transmission waiting time using the random number from the first time width. The MAC control unit 404 sets the determined first transmission waiting time to the back-off timer.

The determination method of the first transmission waiting time in step S509 is the same as the determination method of the first transmission waiting time described in step S503. However, the MAC control unit 404 may cause the first time width of the wireless frame of high priority to be shorter than the first time width of the wireless frame of low priority. As mentioned above, if the first time width of the wireless frame of low priority is 100 milliseconds, then the MAC control unit 404 may set the first time width of the wireless frame of high priority to be 60 milliseconds, for example.

When the back-off timer expires, the wireless interface control unit 406 performs the CCA (step S510) and checks the wireless condition on the wireless communication line (step S511).

As a result of the CCA, if the wireless interface control unit 406 determines that the wireless interface control unit 406 can transmit the wireless frame, the wireless interface control unit 406 transmits the wireless frame to the notification destination apparatus (step S513).

Then, the MAC control unit 404 returns the number of back-offs to the initial value (step S514).

On the other hand, in step S511, as a result of the CCA, the wireless interface control unit 406 determines that the wireless interface control unit 406 cannot transmit the wireless frame (the retransmission is necessary), the MAC control unit 404 increments the number of back-offs by 1 (step S517).

Next, the MAC control unit 404 determines whether or not the number of back-offs has reached the upper limit number (step S518). If the number of back-offs has reached the upper limit number, the MAC control unit 404 determines that the transmission has failed and returns the number of back-offs to the initial value (step S514) .

On the other hand, if the number of back-offs has not reached the upper limit number, the wireless frame is returned to the MAC control unit 404. Then, the MAC control unit 404 stores the wireless frame in a queue for retransmission of high priority and sets the retransmission waiting time to the back-off timer (S509).

The determination method of the retransmission waiting time in step S509 is the same as the determination method of the retransmission waiting time described in step S503. However, the MAC control unit 404 may cause the second time width of the wireless frame of high priority to be shorter than the second time width of the wireless frame of low priority. As mentioned above, if the second time width of the wireless frame of low priority is 50 milliseconds, then the MAC control unit 404 may set the second time width of the wireless frame of high priority to be 30 milliseconds, for example.

Since the processing after step S510 is as described above, an explanation will be omitted.

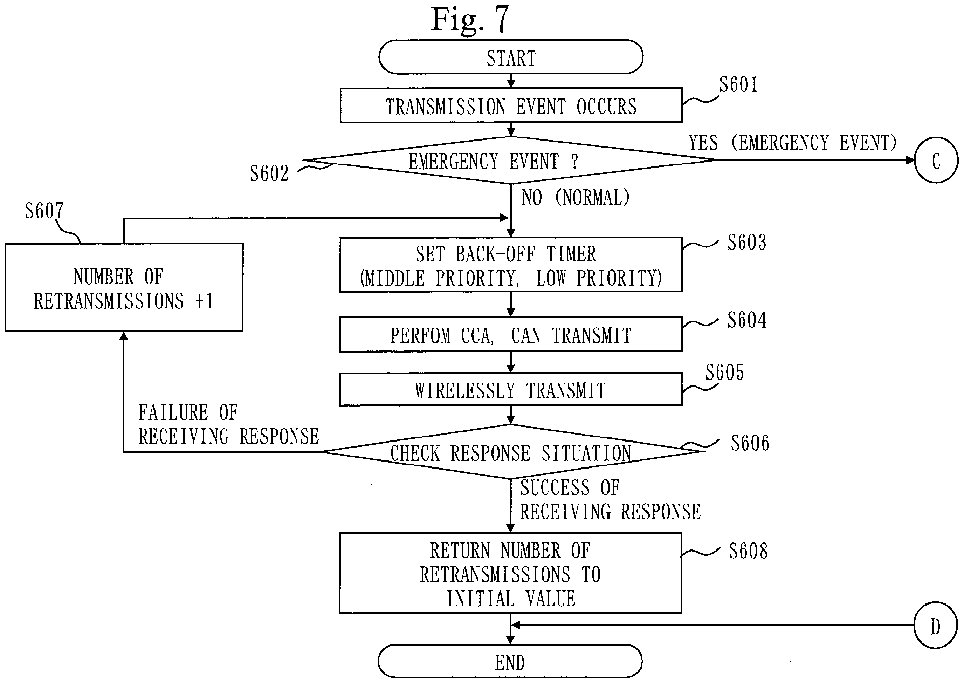

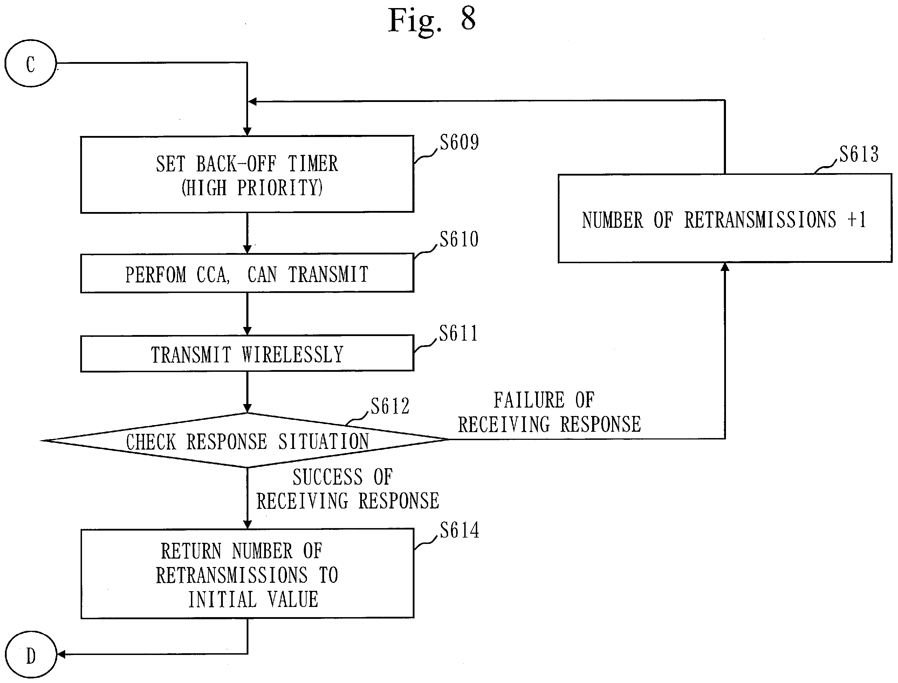

Next, with reference to the flow charts in Fig.7 and Fig.8, an example of operation of the wireless communication apparatus 100 at a time when the wireless communication apparatus 100 has not been able to received a response from the notification destination apparatus will be described.

In the flow charts in Fig.5 and Fig.6, an example is described, in which the wireless frame is not formed due to the CCA and accordingly the retransmission waiting time is set to the back-off timer. In the flow charts in Figs.7 and 8, an example will be described, in which the CCA succeeds and the wireless frame is transmitted, but the response is not received from the notification destination apparatus, then accordingly the retransmission waiting time is set to the back-off timer.

In Fig.7, S601 to S603 are the same as S501 to S503 of Fig.5, so an explanation will be omitted.

When the back-off timer expires, the wireless interface control unit 406 perfoms the CCA, and the wireless interface control unit 406 determines that the wireless interface control unit 406 can transmit the wireless frame (step S604).

Then, the wireless interface control unit 406 transmits the wireless frame to the notification destination apparatus (step S605).

The wireless interface control unit 406 determines whether or not a response has been received from the notification destination apparatus within a certain period of time from the transmission of the wireless frame (step S606). The response from the notification destination apparatus is, for example, a MAC Ack.

If the wireless interface control unit 406 has received a response within the certain period of time from the transmission of the wireless frame, the MAC control unit 404 returns the number of retransmissions to be described later to the initial value (step S608).

On the other hand, in step S 606, if the wireless interface control unit 406 has not received the response within the certain period from the transmission of the wireless frame, the MAC control unit 404 increments the number of retransmissions by 1 (step S607). The number of retransmissions is the number of retransmissions due to failure to receive responses.

Further, the wireless frame is returned to the MAC control unit 404. Then, the MAC control unit 404 stores the wireless frame in a queue for retransmission of middle priority or low priority and sets the retransmission waiting time to the back-off timer (S603).

The determination method of the retransmission waiting time here is the same as the determination method of the retransmission waiting time described in step S503.

Since the processing after step S 604 is as described above, an explanation will be omitted.

Since step S609 is the same as S 509 in Fig.6, an explanation will be omitted. Also, since steps S610 to S614 are the same as S604 to S608 in Fig.7, an explanation will be omitted.

After the number of retransmissions is incremented by 1 in step S 613, the wireless frame is returned to the MAC control unit 404. The MAC control unit 404 stores the wireless frame in the queue for retransmission of high priority and sets the retransmission waiting time to the back-off timer (S609).

The determination method of the retransmission waiting time here is the same as the determination method of the retransmission waiting time explained in step S503 of Fig.5.

Although not illustrated in Fig.7 and Fig.8, it is acceptable that the MAC control unit 404 compares the number of retransmissions with the upper limit number, and when the number of retransmissions reaches the upper limit number, the MAC control unit 404 stops the retransmission of the wireless frame.

In the present embodiment, in order to facilitate understanding, an explanation is made separately for the operational procedure (Fig.5 and Fig.6) in a case of retransmission due to the CCA and the operational procedure (Fig.7 and Fig.8) in a case of retransmission due to failure of reception of response. However, the MAC control unit 404 performs an operation obtained by combining the operational procedure (Fig.5 and Fig.6) in the case of retransmission due to the CCA and the operational procedure (Fig.7 and Fig.8) in the case of retransmission due to failure of reception of response.

In other words, the wireless communication apparatus 100 performs step S606 after step S507 in Fig.5, and sets the waiting time for retransmission to the back-off timer in step S603 after step S607, if the transmission fails.

Similarly, the wireless communication apparatus 100 performs step S612 in Fig.8 after step S513 in Fig.6, and sets the waiting time for retransmission to the back-off timer in step S609 after step S613, if the transmission fails,.

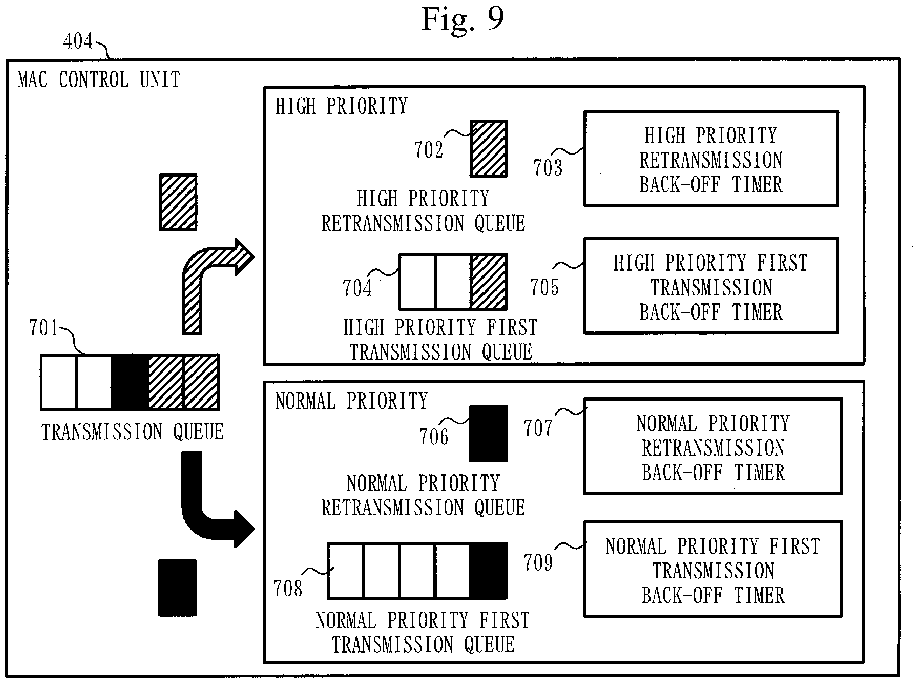

Next, with reference to Fig. 9, an operation of the MAC control unit 404 according to the present embodiment will be described in detail.

Hereinafter, an operation of the MAC control unit 404 in a case where the CCA succeeds and the wireless frame is transmitted to the notification destination apparatus, but the response from the notification destination apparatus cannot be received, will be described.

As illustrated in Fig.9, the MAC control unit 404 manages a transmission queue 701, a high priority first transmission queue 704, a high priority retransmission queue 702, a normal priority first transmission queue 708, and a normal priority retransmission queue 706.

Further, the MAC control unit 404 manages a high priority first transmission back-off timer 705, a high priority retransmission back-off timer 703, a normal priority first transmission back-off timer 709, and a normal priority retransmission back-off timer 707.

The MAC control unit 404 first generates a wireless frame including the sensor signal and stores the generated wireless frame in the transmission queue 701. Then, the MAC control unit 404 stores the wireless frame in the high priority first transmission queue 704 if the wireless frame is subject to the emergency notification. On the other hand, if the wireless frame is subject to the normal application notification, the MAC control unit 404 stores the wireless frame in the normal priority first transmission queue 708.

In the first transmission of the wireless frame of high priority, the MAC control unit 404 sets the first transmission waiting time to the high priority first transmission back-off timer 705. When the high priority first transmission back-off timer 705 expires, the MAC control unit 404 extracts the wireless frame from the high priority first transmission queue 704 and outputs the wireless frame to the wireless interface control unit 406. In the first transmission of the wireless frame of normal priority, the MAC control unit 404 sets the first transmission waiting time to the normal priority first transmission back-off timer 709. When the normal priority first transmission back-off timer 709 expires, the MAC control unit 404 extracts the wireless frame from the normal priority first transmission queue 708 and outputs the wireless frame to the wireless interface control unit 406.

When the CCA succeeds and the wireless frame is transmitted to the notification destination apparatus, but the response from the notification destination apparatus cannot be received, the wireless frame is returned from the wireless interface control unit 406 to the MAC control unit 404 and stored in the transmission queue 701.

If the wireless frame is subject to the emergency notification, the MAC control unit 404 stores the wireless frame in the high priority retransmission queue 702, from the transmission queue 701. On the other hand, if the wireless frame is subject to the normal application notification, the MAC control unit 404 stores the wireless frame in the normal priority retransmission queue 706, from the transmission queue 701.

In the retransmission of the wireless frame of high priority, the MAC control unit 404 sets the retransmission waiting time to the high priority retransmission back-off timer 703. When the high priority retransmission back-off timer 703 expires, the MAC control unit 404 extracts the wireless frame from the high priority retransmission queue 702 and outputs the wireless frame to the wireless interface control unit 406. In the retransmission of the wireless frame of normal priority, the MAC control unit 404 sets the retransmission waiting time to the normal priority retransmission back-off timer 707. When the normal priority retransmission back-off timer 707 expires, the MAC control unit 404 extracts the wireless frame from the normal priority retransmission queue 706 and outputs the wireless frame to the wireless interface control unit 406.

In Fig. 9, the queue for the first transmission and the queue for the retransmission are separated. However, if it is possible to distinguish the wireless frame of the first transmission from the wireless frame of the retransmission, only one queue may be used.

Also, in Fig. 9, examples of two levels being composed of high priority and normal priority are illustrated as a priority level, however the priority level is not limited to two levels.

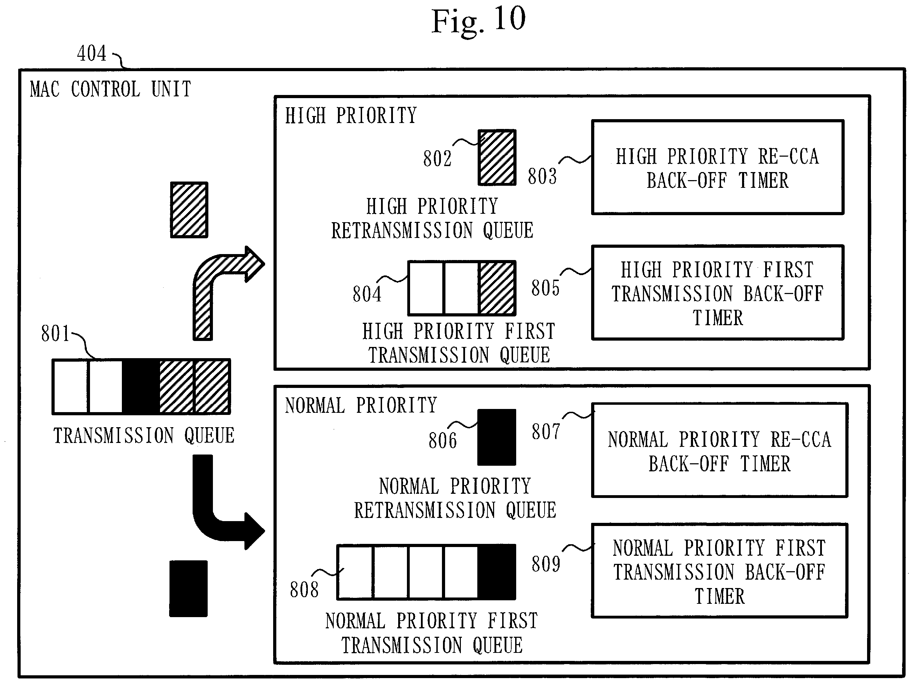

Next, with reference to Fig.10, an example of operation of the MAC control unit 404 at a time when the CCA fails, will be described.

As illustrated in Fig.10, MAC control unit 404 manages a transmission queue 801, a high priority first transmission queue 804, a high priority retransmission queue 802, a normal priority first transmission queue 808, and a normal priority retransmission queue 806.

Further, the MAC control unit 404 manages a high priority first transmission back-off timer 805, a high priority re-CCA back-off timer 803, a normal priority first transmission back-off timer 809, and a normal priority re-CCA back-off timer 807.

The transmission queue 801 is the same as the transmission queue 701 in Fig. 9. The high priority first transmission queue 804 is the same as the high priority first transmission queue 704 in Fig.9. The high priority retransmission queue 802 is the same as the high priority retransmission queue 702 in Fig.9. The normal priority retransmission queue 806 is the same as the normal priority retransmission queue 706 in Fig. 9. The normal priority first transmission queue 808 is the same as the normal priority first transmission queue 708 in Fig.9. The high priority first transmission back-off timer 805 is the same as the high priority first transmission back-off timer 705 in Fig. 9. The high priority re-CCA back-off timer 803 is the same as the high priority retransmission back-off timer 703 in Fig.9. The normal priority first transmission back-off timer 809 is the same as the normal priority first transmission back-off timer 709 in Fig.9. The normal priority re-CCA back-off timer 807 is the same as the normal priority retransmission back-off timer 707 in Fig.9.

The MAC control unit 404 first generates a wireless frame including the sensor signal, and stores the generated wireless frame in the transmission queue 801. If the wireless frame is subject to the emergency notification, the MAC control unit 404 stores the wireless frame in the high priority first transmission queue 804. On the other hand, if the wireless frame is subject to the normal application notification, the MAC control unit 404 stores the wireless frame in the normal priority first transmission queue 808.

In the first transmission of the wireless frame of high priority, the MAC control unit 404 sets the first transmission waiting time to the high priority first transmission back-off timer 805. When the high priority first transmission back-off timer 805 expires, the MAC control unit 404 extracts the wireless frame from the high priority first transmission queue 804 and outputs the wireless frame to the wireless interface control unit 406. In the first transmission of the wireless frame of normal priority, the MAC control unit 404 sets the first transmission waiting time to the normal priority first transmission back-off timer 809. When the normal priority first transmission back-off timer 809 expires, the MAC control unit 404 extracts the wireless frame from the normal priority first transmission queue 808 and outputs the wireless frame to the wireless interface control unit 406.

When the CCA fails, the wireless frame is returned from the wireless interface control unit 406 to the MAC control unit 404 and stored in the transmission queue 801.

If the wireless frame is subject to the emergency notification, the MAC control unit 404 stores the wireless frame in the high priority retransmission queue 802, from the transmission queue 801. On the other hand, if the wireless frame is subject to the normal application notification, the MAC control unit 404 stores the wireless frame in the normal priority retransmission queue 806, from the transmission queue 801.

In the retransmission of the wireless frame of high priority, the MAC control unit 404 sets the retransmission waiting time to the high priority re-CCA back-off timer 803. When the high priority re-CCA back-off timer 803 expires, the MAC control unit 404 extracts the wireless frame from the high priority retransmission queue 802 and outputs the wireless frame to the wireless interface control unit 406. In the retransmission of the wireless frame of normal priority, the MAC control unit 404 sets the retransmission waiting time to the normal priority re-CCA back-off timer 807. When the normal priority re-CCA back-off timer 807 expires, the MAC control unit 404 extracts the wireless frame from the normal priority retransmission queue 806 and outputs the wireless frame to the wireless interface control unit 406.

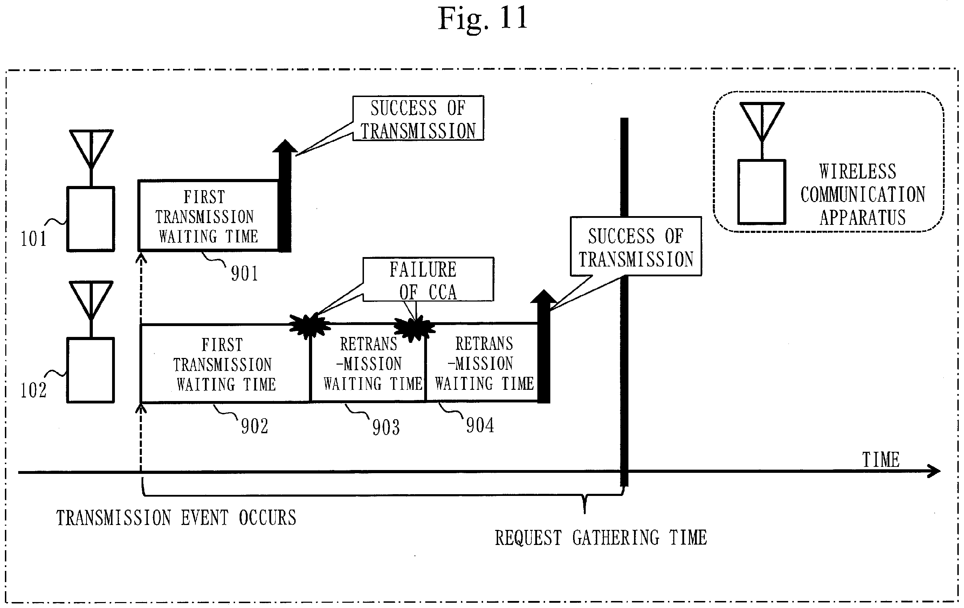

Fig.11 illustrates an example of first transmission waiting time and an example of retransmission waiting time set at a time when CCA fails.

In Fig. 11, the wireless communication apparatus 101 determines first transmission waiting time 901 from the first time width, using the random number. Then, after the first transmission waiting time 901 expires, the wireless communication apparatus 101 perfoms the CCA, succeeds in the CCA, and transmits the wireless frame.

The wireless communication apparatus 102 determines the first transmission waiting time 902 from the first time width, using the random number. Since the first transmission waiting time is determined using the random number, the first transmission waiting time 901 of the wireless communication apparatus 101 is different from the first transmission waiting time 902 of the wireless communication apparatus 102.

After the first transmission waiting time 902 expires, the wireless communication apparatus 102 perfoms the CCA and fails in the CCA. Therefore, the wireless communication apparatus 102 determines the retransmission waiting time 903 from the second time width, using the random number. After the retransmission waiting time 903 expires, the wireless communication apparatus 102 perfoms the CCA and fails in the CCA. Therefore, the wireless communication apparatus 102 further determines the retransmission waiting time 904 from the second time width, using the random number. Since the retransmission waiting time is determined using the random number, the retransmission waiting time 903 is different from the retransmission waiting time 904. In the example of Fig. 11, the wireless communication apparatus 102 succeeds in the CCA after the retransmission waiting time 904 expires, and transmits the wireless frame to the notification destination apparatus.

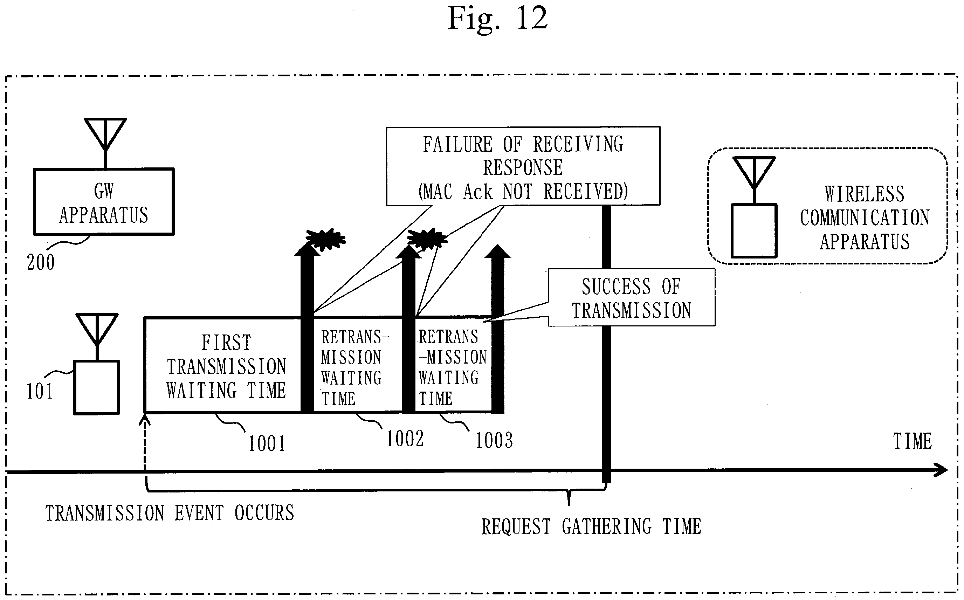

Fig.12 illustrates an example of first transmission waiting time and an example of retransmission waiting time set at a time when reception of a response fails.

In Fig. 12, the wireless communication apparatus 101 determines first transmission waiting time 1001 from the first time width, using the random number. Then, after the first transmission waiting time 1001 expires, the wireless communication apparatus 101 perfoms the CCA, succeeds in the CCA, and transmits the wireless frame. However, the wireless communication apparatus 101 cannot receive a response from the GW apparatus 200 which is the notification destination apparatus.

Therefore, the wireless communication apparatus 101 determines retransmission waiting time 1002 from the second time width, using the random number. Then, after the first transmission waiting time 1002 expires, the wireless communication apparatus 101 perfoms the CCA, succeeds in the CCA, and transmits the wireless frame. However, the wireless communication apparatus 101 cannot receive a response from the GW apparatus 200. Therefore, the wireless communication apparatus 101 further determines retransmission waiting time 1003 from the second time width, using the random number. Since the retransmission waiting time is determined using the random number, the retransmission waiting time 1002 is different from the retransmission waiting time 1003. In the example of Fig.12, the wireless communication apparatus 101 succeeds in the CCA after the retransmission waiting time 1003 expires, transmits the wireless frame to the notification destination apparatus, and receives the response from the GW apparatus 200.

### *** Explanation of Effect of Embodiment ***

According to the present embodiment, the retransmission waiting time is selected from the second time width which is shorter than the first time width. Therefore it is possible to increase a possibility that the retransmission is performed promptly even if the first transmission fails.

Hence, even in a situation where emergency notifications can occur simultaneously in a plurality of wireless communication apparatuses, the transmission of emergency notifications from all of the wireless communication apparatuses can be completed in an expected request time.

### Second Embodiment

In the first embodiment, an example has been described, in which the MAC control unit 404 determines the retransmission waiting time based on the second time width which is a fixed value.

Alternatively, the MAC control unit 404 may determine the retransmission waiting time based on the second time width which is a variable value.

For example, the MAC control unit 404 may change length of the second time width according to communication status on the wireless communication line on which the wireless interface control unit 406 performs the retransmission.

Specifically, the MAC control unit 404 lengthens the second time width as communication amount on the wireless communication line increases, that is, as the wireless communication line becomes congested.

However, the MAC control unit 404 ensures that the second time width does not exceed the first time width.

The present embodiment is the same as the first embodiment except that the second time width is variable. That is, the hardware configuration and the functional configuration of the wireless communication apparatus 100, and the operational procedure of the wireless communication apparatus 100 are as illustrated in the first embodiment.

### Third Embodiment

In the first embodiment, an example has been described, in which the first time width is composed of i slots of the prescribed slot width and the second time width is composed of j (j <i) slots of the same slot width.

Alternatively, the first time width may be composed of n (n is an integer equal to or greater than 2) slots of first slot width and the second time width may be composed of the n slots of second slot width which is shorter than the first slot width.

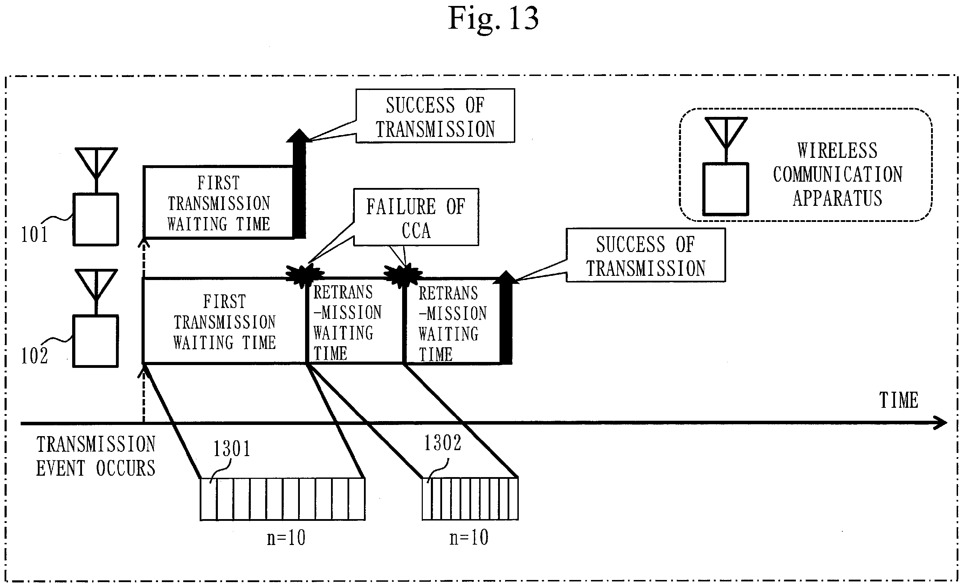

Fig.13 illustrates examples of the first time width and the second time width according to the present embodiment.

In Fig.13, n = 10. That is, the first time width and the second time width are each composed of 10 slots.

However, slot width (second slot width) of a slot 1302 composing the second time width is shorter than slot width (first slot width) of a slot 1301 composing the first time width.

Therefore, the second time width is shorter than the first time width.

According to the present embodiment, by setting the slot width of the second time width shorter than the slot width of the first time width, it is possible to decrease a possibility of failing the CCA at the retransmission of the wireless frame (a possibility of colliding with another wireless communication apparatus 100).

Further, in Fig.13, the second time width which is a premise of the retransmission waiting time at a time of the CCA failure is illustrated. However, the second time width, which is a premise of the retransmission waiting time at a time of failing to receive a response from the notification destination apparatus, may also be composed of slots of the second slot width which is shorter than the first slot width, as in Fig.13.

The present embodiment is the same as the first embodiment except that compositions of the first time width and the second time width are different. That is, the hardware configuration and the functional configuration of the wireless communication apparatus 100, and the operational procedure of the wireless communication apparatus 100 are as illustrated in the first embodiment.

### Fourth Embodiment

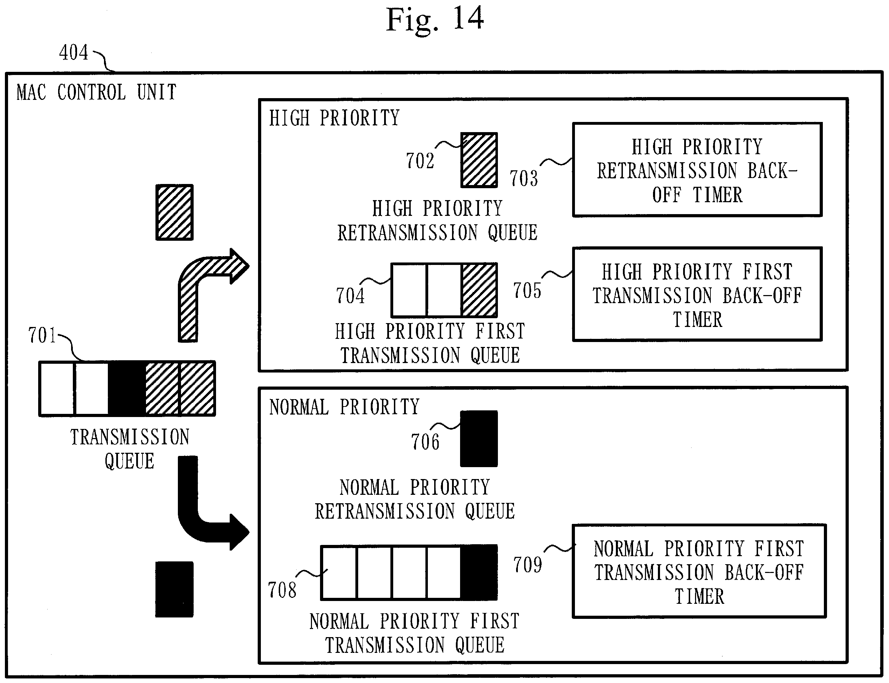

In the first embodiment, as illustrated in Fig.9, a back-off timer for retransmission (high priority retransmission back-off timer 703 and normal priority retransmission back-off timer 707) is provided for each of high priority and normal priority. However, as illustrated in Fig.14, for the normal priority, the back-off timer for retransmission (normal priority retransmission back-off timer 707) may be omitted.

Also in the configuration of Fig.13, the back-off timer for retransmission of normal priority (normal priority re-CCA back-off timer 807) may be omitted.

In the first embodiment, the second time width is set to be shorter than the first time width for all the priorities. However, for the lowest priority, the second time width may be set to be longer than the first time width. In other words, for the lowest priority, it is acceptable to have a higher probability that the retransmission waiting time becomes longer than the first transmission waiting time.

By doing this, it is possible to relieve a congestion of wireless communication.

In the first to fourth embodiments, the wireless communication apparatus 100 has been described. However, the operation of the wireless communication apparatus 100 described in the first to fourth embodiments can be applied to a communication apparatus which performs wired communication.

The embodiments of the present invention has been described above.

Alternatively, the communication apparatus may be implemented by combining two or more of the embodiments together.

Alternatively, one of the embodiments may be partially implemented.

Alternatively, the communication apparatus may be implemented by partially combining two or more of the embodiments together.

Note that the present invention is not limited to these embodiments and various changes may be made as necessary.

### *** Explanation of hardware configuration***

Finally, hardware configuration of the wireless communication apparatus 100 is supplementarily explaned.

The ROM 305 stores an OS (Operating System) in addition to programs for realizing the application determination unit 402, the priority control unit 403, and the MAC control unit 404.

At least a part of the OS is executed by processor 304.

By executing the OS by the processor 304, a task management, a memory management, a file management, a communication control and the like are performed.

Information, data, a signal value and a variable value indicating the result of processing of the application determination unit 402, the priority control unit 403 and the MAC control unit 404 are stored in the RAM 306, or a register or a cache memory in the wireless MAC processing processor 302 or the processor 304.

The programs realizing the functions of the application determination unit 402, the priority control unit 403 and the MAC control unit 404 are stored in storage mediums such as a magnetic disk, a flexible disk, an optical disc, a compact disc, a Blu-ray (registered trademark) disc, a DVD and the like.

"Unit" of the application determination unit 402, the priority control unit 403 and the MAC control unit404 may be read as "circuit", "step", "procedure", or "process"

The wireless communication apparatus 100 may be realized by electronic circuits such as a logic IC (Integrated Circuit), a GA (Gate Array), an ASIC (Application Specific Integrated Circuit), an FPGA (Field-Programmable Gate Array).

In this case, the application determination unit 402, the priority control unit 403, and the MAC control unit 404 are each realized as a part of an electronic circuit.

The processor and the electronic circuit are collectively referred to as processing circuitry.

### Reference Signs List

100: wireless communication apparatus, 200: GW apparatus, 301: wireless interface, 302: wireless MAC processing processor, 303: sensor interface, 304: processor, 305: ROM, 306: RAM, 401: sensor interface control unit, 402: application determination unit, 403: priority control unit, 404: MAC control unit, 405: data management unit, 406: wireless interface control unit, 701: transmission queue, 702: high priority retransmission queue, 703: high priority retransmission back-off timer, 704: high priority first transmission queue, 705: high priority first transmission back-off timer, 706: normal priority retransmission queue, 707: normal priority retransmission back-off timer, 708: normal priority first transmission queue, 709: normal priority first transmission back-off timer, 801: transmission queue, 802: high priority retransmission queue, 803: high priority re-CCA back-off timer, 804: high priority first transmission queue, 805: high priority first transmission back-off timer, 806: normal priority retransmission queue, 807: normal priority re-CCA back-off timer, 808: normal priority first transmission queue, 809: normal priority first transmission back-off timer

## Claims

1. A communication apparatus (100) comprising:
a first transmission waiting time determination unit (404) to determine first transmission waiting time which is waiting time before performing first transmission of data, from a first time width, using a first random number; and
a retransmission waiting time determination unit (404) to determine, when first transmission of data whose priority is lowest fails, retransmission waiting time which is waiting time before performing retransmission of the data whose priority is lowest, from a second time width which is longer than the first time width, using a second random number, and determine, when first transmission of data whose priority is high fails, retransmission waiting time which is waiting time before performing retransmission of the data whose priority is high, from a third time width which is shorter than the first time width, using a third random number;
wherein
the first time width is composed of n, n is an integer equal to or greater than 2, slots each of which has a first slot width,
the second time width is composed of the n slots each of which has a second slot width which is longer than the first slot width,
wherein the third time width is composed of the n slots each of which has a third slot width which is shorter than the first slot width,
the first transmission waiting time determination unit (404) selects one of the slots of the first time width using the first random number and determines the time corresponding to the selected slot of the first time width as the first transmission waiting time, and
the retransmission waiting time determination unit (404) selects one of the slots of the second time width using the second random number, determines the time corresponding to the selected slot of the second time width as the retransmission waiting time of the data whose priority is lowest, selects one of the slots of the third time width using the third random number, and determines the time corresponding to the selected slot of the third time width as the retransmission waiting time of the data whose priority is high.

2. The communication apparatus (100) according to claim 1, wherein
at least either when the first transmission has not been able to be performed or when the first transmission has been able to be performed but a response to the first transmission has not been able to be received, the retransmission waiting time determination unit (404) determines at least either one of the retransmission waiting time of the data whose priority is lowest and the retransmission waiting time of the data whose priority is high.

3. The communication apparatus (100) according to claim 1, wherein
when the retransmission fails, the retransmission waiting time determination unit (404) selects one of the slots of the second time width using a fourth random number, determines the time corresponding to the selected slot of the second time width as waiting time before performing further retransmission of the data whose priority is lowest, selects one of the slots of the third time width using a fifth random number, and determines the time corresponding to the selected slot of the third time width as waiting time before performing further retransmission of the data whose priority is high.

4. The communication apparatus (100) according to claim 3, wherein
at least either when the retransmission has not been able to be performed or when the retransmission has been able to be performed but a response to the retransmission has not been able to be received, the retransmission waiting time determination unit (404) determines the waiting time before performing the further retransmission.

5. The communication apparatus (100) according to claim 1, wherein
the retransmission waiting time determination unit (404) changes at least either one of length of the second time width and length of the third time width according to communication state on a communication line on which the communication apparatus (100) performs the retransmission.

6. The communication apparatus (100) according to claim 5, wherein
the retransmission waiting time determination unit (404) lengthens at least either one of the second time width and the third time width, as communication amount on the communication line increases.

7. The communication apparatus (100) according to claim 1, wherein
the communication apparatus (100) is a wireless communication apparatus.

8. A communication method comprising:
determining by a computer, first transmission waiting time which is waiting time before performing first transmission of data, from a first time width, using a first random number; and
determining by the computer, when first transmission of data whose priority is lowest fails, retransmission waiting time which is waiting time before performing retransmission of the data whose priority is lowest, from a second time width which is longer than the first time width, using a second random number, and determining, when first transmission of data whose priority is high fails, retransmission waiting time which is waiting time before performing retransmission of the data whose priority is high, from a third time width which is shorter than the first time width, using a third random number;
wherein
the first time width is composed of n, n is an integer equal to or greater than 2, slots each of which has a first slot width,
the second time width is composed of the n slots each of which has a second slot width which is longer than the first slot width,
wherein the third time width is composed of the n slots each of which has a third slot width which is shorter than the first slot width,
the computer selects one of the slots of the first time width and determines the time corresponding to the selected slot of the first time width as the first transmission waiting time, and
the computer selects one of the slots of the second time width using the second random number, determines the time corresponding to the selected slot of the second time width as the retransmission waiting time of the data whose priority is lowest, selects one of the slots of the third time width using the third random number, and determines the time corresponding to the selected slot of the third time width as the retransmission waiting time of the data whose priority is high.

9. A communication program to cause a computer to execute:
a first transmission waiting time determination process to determine first transmission waiting time which is waiting time before performing first transmission of data, from a first time width, using a first random number; and
a retransmission waiting time determination process to determine, when first transmission of data whose priority is lowest fails, retransmission waiting time which is waiting time before performing retransmission of the data whose priority is lowest, from a second time width which is longer than the first time width, using a second random number, and determine, when first transmission of data whose priority is high fails, retransmission waiting time which is waiting time before performing retransmission of the data whose priority is high, from a third time width which is shorter than the first time width, using a third random number;
wherein
the first time width is composed of n, n is an integer equal to or greater than 2, slots each of which has a first slot width,
the second time width is composed of the n slots each of which has a second slot width which is longer than the first slot width,
wherein the third time width is composed of the n slots each of which has a third slot width which is shorter than the first slot width,
the first transmission waiting time determination process is configured to select one of the slots of the first time width using the first random number and to determine the time corresponding to the selected slot of the first time width as the first transmission waiting time, and
the retransmission waiting time determination process is configured to select one of the slots of the second time width using the second random number, to determine the time corresponding to the selected slot of the second time width as the retransmission waiting time of the data whose priority is lowest, to select one of the slots of the third time width using the third random number, and to determine the time corresponding to the selected slot of the third time width as the retransmission waiting time of the data whose priority is high.

## Patentansprüche

1. Kommunikationsvorrichtung (100), umfassend:
eine erste Übertragungswartezeit-Bestimmungseinheit (404) zum Bestimmen der ersten Übertragungswartezeit, die eine Wartezeit vor der Durchführung einer ersten Übertragung von Daten aus einer ersten Zeitbreite unter Verwendung einer ersten Zufallszahl ist; und
eine Rückübertragungswartezeit-Bestimmungseinheit (404) zum Bestimmen, wenn die erste Übertragung von Daten, deren Priorität am niedrigsten ist, fehlschlägt, der Rückübertragungswartezeit, die eine Wartezeit vor der Durchführung der Rückübertragung von Daten ist, deren Priorität am niedrigsten ist, aus einer zweiten Zeitbreite, die länger ist als die erste Zeitbreite, unter Verwendung einer zweiten Zufallszahl,
und Bestimmen, wenn die erste Übertragung von Daten, deren Priorität hoch ist, fehlschlägt, der Rückübertragungswartezeit, die eine Wartezeit vor der Durchführung der Rückübertragung von Daten ist, deren Priorität hoch ist, aus einer dritten Zeitbreite, die kürzer ist als die erste Zeitbreite, unter Verwendung einer dritten Zufallszahl;
wobei
die erste Zeitbreite aus n, wobei n eine ganze Zahl gleich oder größer als 2 ist, Schlitzen besteht, von denen jeder eine erste Schlitzbreite aufweist,
die zweite Zeitbreite aus den n Schlitzen besteht, von denen jeder eine zweite Schlitzbreite aufweist, die länger ist als die erste Schlitzbreite,
wobei die dritte Zeitbreite aus den n Schlitzen besteht, von denen jeder eine dritte Schlitzbreite aufweist, die kürzer ist als die erste Schlitzbreite,
die erste Übertragungswartezeit-Bestimmungseinheit (404) einen der Schlitze der ersten Zeitbreite unter Verwendung der ersten Zufallszahl auswählt und die Zeit, die dem ausgewählten Schlitz der ersten Zeitbreite entspricht, als erste Übertragungswartezeit bestimmt, und
die erste Rückübertragungswartezeit-Bestimmungseinheit (404) einen der Schlitze der zweiten Zeitbreite unter Verwendung der zweiten Zufallszahl auswählt, die Zeit, die dem ausgewählten Schlitz der zweiten Zeitbreite entspricht, als die Rückübertragungswartezeit der Daten, deren Priorität die niedrigste ist, bestimmt, einen der Schlitze der dritten Zeitbreite unter Verwendung der dritten Zufallszahl auswählt und die Zeit, die dem ausgewählten Schlitz der dritten Zeitbreite entspricht, als die Rückübertragungswartezeit der Daten, deren Priorität hoch ist, bestimmt.

2. Kommunikationsvorrichtung (100) nach Anspruch 1, wobei
die Rückübertragungswartezeit-Bestimmungseinheit (404), wenn zumindest entweder die erste Übertragung nicht durchgeführt werden konnte oder wenn die erste Übertragung durchgeführt werden konnte, aber eine Antwort auf die erste Übertragung nicht empfangen werden konnte, zumindest entweder die Rückübertragungswartezeit der Daten, deren Priorität am niedrigsten ist, oder die Rückübertragungswartezeit der Daten, deren Priorität hoch ist, bestimmt.

3. Kommunikationsvorrichtung (100) nach Anspruch 1, wobei
wenn die Übertragung fehlschlägt, die Rückübertragungswartezeit-Bestimmungseinheit (404) einen der Schlitze der zweiten Zeitbreite unter Verwendung einer vierten Zufallszahl auswählt, die Zeit, die dem ausgewählten Schlitz der zweiten Zeitbreite entspricht, als Wartezeit vor der Durchführung weiterer Rückübertragung von Daten, deren Priorität am niedrigsten ist, bestimmt, einen der Schlitze der dritten Zeitbreite unter Verwendung einer fünften Zufallszahl auswählt, und die Zeit, die dem ausgewählten Schlitz der dritten Zeitbreite entspricht, als Wartezeit vor der Durchführung weiterer Rückübertragung von Daten, deren Priorität hoch ist, bestimmt.

4. Kommunikationsvorrichtung (100) nach Anspruch 3, wobei
wenn zumindest entweder die Rückübertragung nicht durchgeführt werden konnte oder wenn die Rückübertragung durchgeführt werden konnte, aber eine Antwort auf die Rückübertragung nicht empfangen werden konnte, die Rückübertragungswartezeit-Bestimmungseinheit (404), die Wartezeit vor der Durchführung weiterer Rückübertragung bestimmt.

5. Kommunikationsvorrichtung (100) nach Anspruch 1, wobei
die Rückübertragungswartezeit-Bestimmungseinheit (404) zumindest entweder die Länge der zweiten Zeitbreite oder die Länge der dritten Zeitbreite entsprechend dem Kommunikationszustand auf einer Kommunikationsleitung ändert, auf der die Kommunikationsvorrichtung (100) die Rückübertragung durchführt.

6. Kommunikationsvorrichtung (100) nach Anspruch 5, wobei
die Rückübertragungswartezeit-Bestimmungseinheit (404) zumindest entweder die zweite Zeitbreite oder die dritte Zeitbreite verlängert, wenn sich der Kommunikationsumfang auf der Kommunikationsleitung erhöht.

7. Kommunikationsvorrichtung (100) nach Anspruch 1, wobei
die Kommunikationsvorrichtung (100) eine drahtlose Kommunikationsvorrichtung ist.

8. Kommunikationsverfahren, umfassend:
Bestimmen, durch einen Computer, einer ersten Übertragungswartezeit vor der Durchführung einer ersten Übertragung von Daten aus einer ersten Zeitbreite unter Verwendung einer ersten Zufallszahl; und
Bestimmen, durch den Computer, wenn die erste Übertragung von Daten, deren Priorität am niedrigsten ist, fehlschlägt, der Rückübertragungswartezeit, die eine Wartezeit vor der Durchführung der Rückübertragung der Daten ist, deren Priorität am niedrigsten ist, aus einer zweiten Zeitbreite, die länger ist als die erste Zeitbreite, unter Verwendung einer zweiten Zufallszahl, und Bestimmen, wenn die erste Übertragung von Daten, deren Priorität hoch ist, fehlschlägt, der Rückübertragungswartezeit, die eine Wartezeit vor der Durchführung von Rückübertragung der Daten ist, deren Priorität hoch ist, aus einer dritten Zeitbreite, die kürzer ist als die erste Zeitbreite, unter Verwendung einer dritten Zufallszahl;
wobei
die erste Zeitbreite aus n, wobei n eine ganze Zahl gleich oder größer als 2 ist, Schlitzen besteht, von denen jeder eine erste Schlitzbreite aufweist,
die zweite Zeitbreite aus den n Schlitzen besteht, von denen jeder eine zweite Schlitzbreite aufweist, die länger ist als die erste Schlitzbreite,
wobei die dritte Zeitbreite aus den n Schlitzen besteht, von denen jeder eine dritte Schlitzbreite aufweist, die kürzer ist als die erste Schlitzbreite,
der Computer einen der Schlitze der ersten Zeitbreite auswählt und die Zeit, die dem ausgewählten Schlitz der ersten Zeitbreite entspricht, als die erste Übertragungswartezeit bestimmt, und
der Computer einen der Schlitze der zweiten Zeitbreite unter Verwendung der zweiten Zufallszahl auswählt, die Zeit, die dem ausgewählten Schlitz der zweiten Zeitbreite entspricht, als die Rückübertragungswartezeit der Daten, deren Priorität am niedrigsten ist, bestimmt, einen der Schlitze der dritten Zeitbreite unter Verwendung der dritten Zufallszahl auswählt und die Zeit, die dem ausgewählten Schlitz der dritten Zeitbreite entspricht, als die Rückübertragungswartezeit der Daten, deren Priorität hoch ist, bestimmt.

9. Kommunikationsprogramm, das einen Computer veranlasst, auszuführen:
einen erste Übertragungswartezeit-Bestimmungsprozess zum Bestimmen der ersten Übertragungswartezeit, die eine Wartezeit vor der Durchführung einer ersten Übertragung von Daten aus einer ersten Zeitbreite unter Verwendung einer ersten Zufallszahl ist; und
einen Rückübertragungswartezeit-Bestimmungsprozess zum Bestimmen, wenn die erste Übertragung von Daten, deren Priorität am niedrigsten ist, fehlschlägt, der Rückübertragungswartezeit, die eine Wartezeit vor der Durchführung der Rückübertragung von Daten ist, aus einer zweiten Zeitbreite, die länger ist als die erste Zeitbreite, unter Verwendung einer zweiten Zufallszahl,
und Bestimmen, wenn die erste Übertragung von Daten, deren Priorität hoch ist, fehlschlägt, der Rückübertragungswartezeit, die eine Wartezeit vor der Durchführung der Rückübertragung von Daten ist, deren Priorität hoch ist, aus einer dritten Zeitbreite, die kürzer ist als die erste Zeitbreite, unter Verwendung einer dritten Zufallszahl;
wobei
die erste Zeitbreite aus n, wobei n eine ganze Zahl gleich oder größer als 2 ist, Schlitzen besteht, von denen jeder eine erste Schlitzbreite aufweist,
die zweite Zeitbreite aus den n Schlitzen besteht, von denen jeder eine zweite Schlitzbreite aufweist, die länger ist als die erste Schlitzbreite,
wobei die dritte Zeitbreite aus den n Schlitzen besteht, von denen jeder eine dritte Schlitzbreite aufweist, die kürzer ist als die erste Schlitzbreite,
der erste Übertragungswartezeit-Bestimmungsprozess eingerichtet ist, einen der Schlitze der ersten Zeitbreite unter Verwendung der ersten Zufallszahl auszuwählen und die Zeit, die dem ausgewählten Schlitz der ersten Zeitbreite entspricht, als erste Übertragungswartezeit zu bestimmen, und
der Rückübertragungswartezeit-Bestimmungsprozess eingerichtet ist, einen der Schlitze der zweiten Zeitbreite unter Verwendung der zweiten Zufallszahl auszuwählen, die Zeit, die dem ausgewählten Schlitz der zweiten Zeitbreite entspricht, als die Rückübertragungswartezeit der Daten, deren Priorität die niedrigste ist, zu bestimmen, einen der Schlitze der dritten Zeitbreite unter Verwendung der dritten Zufallszahl auszuwählen und die Zeit, die dem ausgewählten Schlitz der dritten Zeitbreite entspricht, als die Rückübertragungswartezeit der Daten, deren Priorität hoch ist, zu bestimmen.

## Revendications

1. Appareil de communication (100) comprenant :
une unité de détermination d'un premier délai d'attente de transmission (404), destinée à déterminer un premier délai d'attente de transmission qui est un délai d'attente avant l'exécution d'une première transmission de données, à partir d'une première largeur de temps, en utilisant un premier nombre aléatoire ; et
une unité de détermination d'un délai d'attente de retransmission (404), destinée à
déterminer, lorsque la première transmission de données dont la priorité est la plus basse échoue, le délai d'attente de retransmission qui est un délai d'attente avant l'exécution d'une retransmission de données dont la priorité est la plus basse, à partir d'une deuxième largeur de temps qui est plus longue que la première largeur de temps, en utilisant un deuxième nombre aléatoire, et
déterminer, lorsque la première transmission de données dont la priorité est élevée échoue, le délai d'attente de retransmission qui est un délai d'attente avant l'exécution d'une retransmission de données dont la priorité est élevée, à partir d'une troisième largeur de temps qui est plus courte que la première largeur de temps, en utilisant un troisième nombre aléatoire ;
où
la première largeur de temps se compose de n tranches, n étant un nombre entier égal ou supérieur à 2, chacune d'elles présentant une première largeur de tranche,
la deuxième largeur de temps se compose de n tranches, chacune d'elles présentant une deuxième largeur de tranche qui est plus longue que la première largeur de tranche,
où la troisième largeur de temps se compose de n tranches, chacune d'elles présentant une troisième largeur de tranche qui est plus courte que la première largeur de tranche,
l'unité de détermination d'un premier délai d'attente de transmission (404) sélectionne l'une des tranches de la première largeur de temps en utilisant le premier nombre aléatoire, et détermine le temps correspondant à la tranche sélectionnée de la première largeur de temps en tant que premier délai d'attente de transmission, et
l'unité de détermination d'un délai d'attente de retransmission (404) sélectionne l'une des tranches de la deuxième largeur de temps en utilisant le deuxième nombre aléatoire, détermine le temps correspondant à la tranche sélectionnée de la deuxième largeur de temps en tant que délai d'attente de retransmission des données dont la priorité est la plus basse, sélectionne l'une des tranches de la troisième largeur de temps en utilisant le troisième nombre aléatoire, et détermine le temps correspondant à la tranche sélectionnée de la troisième largeur de temps en tant que délai d'attente de retransmission des données dont la priorité est élevée.

2. Appareil de communication (100) selon la revendication 1, où
au moins lorsque la première transmission n'a pas pu être exécutée ou lorsque la première transmission a pu être exécutée mais quand aucune réponse à la première transmission n'a pu être reçue, l'unité de détermination d'un délai d'attente de retransmission (404) détermine au moins l'un du délai d'attente de retransmission des données dont la priorité est la plus basse, et du délai d'attente de retransmission des données dont la priorité est élevée.

3. Appareil de communication (100) selon la revendication 1, où
lorsque la retransmission échoue, l'unité de détermination d'un délai d'attente de retransmission (404)
sélectionne l'une des tranches de la deuxième largeur de temps en utilisant un quatrième nombre aléatoire,
détermine le temps correspondant à la tranche sélectionnée de la deuxième largeur de temps en tant que délai d'attente avant l'exécution d'une autre retransmission des données dont la priorité est la plus basse,
sélectionne l'une des tranches de la troisième largeur de temps en utilisant un cinquième nombre aléatoire, et
détermine le temps correspondant à la tranche sélectionnée de la troisième largeur de temps en tant que délai d'attente avant l'exécution d'une autre retransmission des données dont la priorité est élevée.

4. Appareil de communication (100) selon la revendication 3, où
au moins lorsque la retransmission n'a pas pu être exécutée ou lorsque la retransmission a pu être exécutée mais lorsque aucune réponse à la retransmission n'a pu être reçue, l'unité de détermination d'un délai d'attente de retransmission (404) détermine le délai d'attente avant d'exécuter une autre retransmission.

5. Appareil de communication (100) selon la revendication 1, où
l'unité de détermination d'un délai d'attente de retransmission (404) modifie l'une au moins de la longueur de la deuxième largeur de temps, et de la longueur de la troisième largeur de temps selon l'état de communication sur une ligne de communication sur laquelle l'appareil de communication (100) effectue la retransmission.

6. Appareil de communication (100) selon la revendication 5, où
l'unité de détermination d'un délai d'attente de retransmission (404) rallonge l'une au moins de la deuxième largeur de temps et de la troisième largeur de temps, à mesure qu'augmente la quantité de communication sur la ligne de communication.

7. Appareil de communication (100) selon la revendication 1, où
l'appareil de communication (100) est un appareil de communication sans fil.

8. Procédé de communication comprenant les étapes suivantes :
déterminer avec un ordinateur, un premier délai d'attente de transmission qui est un délai d'attente avant l'exécution d'une première transmission de données, à partir d'une première largeur de temps, en utilisant un premier nombre aléatoire ; et
déterminer avec l'ordinateur, lorsque la première transmission de données dont la priorité est la plus basse échoue, le délai d'attente de retransmission qui est un délai d'attente avant l'exécution d'une retransmission de données dont la priorité est la plus basse, à partir d'une deuxième largeur de temps qui est plus longue que la première largeur de temps, en utilisant un deuxième nombre aléatoire, et
déterminer, lorsque la première transmission de données dont la priorité est élevée échoue, le délai d'attente de retransmission qui est un délai d'attente avant l'exécution d'une retransmission de données dont la priorité est élevée, à partir d'une troisième largeur de temps qui est plus courte que la première largeur de temps, en utilisant un troisième nombre aléatoire ;
où
la première largeur de temps se compose de n tranches, n étant un nombre entier égal ou supérieur à 2, chacune d'elles présentant une première largeur de tranche,
la deuxième largeur de temps se compose de n tranches, chacune d'elles présentant une deuxième largeur de tranche qui est plus longue que la première largeur de tranche,
où la troisième largeur de temps se compose de n tranches, chacune d'elles présentant une troisième largeur de tranche qui est plus courte que la première largeur de tranche,
l'ordinateur sélectionne l'une des tranches de la première largeur de temps, et détermine le temps correspondant à la tranche sélectionnée de la première largeur de temps en tant que premier délai d'attente de transmission, et
l'ordinateur sélectionne l'une des tranches de la deuxième largeur de temps en utilisant le deuxième nombre aléatoire, détermine le temps correspondant à la tranche sélectionnée de la deuxième largeur de temps en tant que délai d'attente de retransmission des données dont la priorité est la plus basse, sélectionne l'une des tranches de la troisième largeur de temps en utilisant le troisième nombre aléatoire, et détermine le temps correspondant à la tranche sélectionnée de la troisième largeur de temps en tant que délai d'attente de retransmission des données dont la priorité est élevée.

9. Programme de communication destiné à faire exécuter par un ordinateur :
un processus de détermination d'un premier délai d'attente de transmission, destiné à déterminer un premier délai d'attente de transmission qui est un délai d'attente avant l'exécution d'une première transmission de données, à partir d'une première largeur de fois, en utilisant un premier nombre aléatoire ; et
un processus de détermination d'un délai d'attente de retransmission, destiné à
déterminer, lorsque la première transmission de données dont la priorité est la plus basse échoue, le délai d'attente de retransmission qui est un délai d'attente avant l'exécution d'une retransmission de données dont la priorité est la plus basse, à partir d'une deuxième largeur de temps qui est plus longue que la première largeur de temps, en utilisant un deuxième nombre aléatoire,
et déterminer, lorsque la première transmission de données dont la priorité est élevée échoue, le délai d'attente de retransmission qui est un délai d'attente avant l'exécution d'une retransmission de données dont la priorité est élevée, à partir d'une troisième largeur de temps qui est plus courte que la première largeur de temps, en utilisant un troisième nombre aléatoire ;
où
la première largeur de temps se compose de n tranches, n étant un nombre entier égal ou supérieur à 2, chacune d'elles présentant une première largeur de tranche,
la deuxième largeur de temps se compose de n tranches, chacune d'elles présentant une deuxième largeur de tranche qui est plus longue que la première largeur de tranche,
où la troisième largeur de temps se compose de n tranches, chacune d'elles présentant une troisième largeur de tranche qui est plus courte que la première largeur de tranche,
le processus de détermination d'un premier délai d'attente de transmission est configuré afin de sélectionner l'une des tranches de la première largeur de temps en utilisant le premier nombre aléatoire, et de déterminer le temps correspondant à la tranche sélectionnée de la première largeur de temps en tant que premier délai d'attente de transmission, et
le processus de détermination d'un délai d'attente de retransmission est configuré afin de sélectionner l'une des tranches de la deuxième largeur de temps en utilisant le deuxième nombre aléatoire, de déterminer le temps correspondant à la tranche sélectionnée de la deuxième largeur de temps en tant que délai d'attente de retransmission des données dont la priorité est la plus basse, de sélectionner l'une des tranches de la troisième largeur de temps en utilisant le troisième nombre aléatoire, et de déterminer le temps correspondant à la tranche sélectionnée de la troisième largeur de temps en tant que délai d'attente de retransmission des données dont la priorité est élevée.
